# EUROPÄISCHE PATENTANMELDUNG

(11) **EP 3 961 574 A1**
(43) Veröffentlichungstag der Anmeldung: **02.03.2022**
(21) Anmeldenummer: 20192712.6
(22) Anmeldetag: 25.08.2020
(51) Int. Cl.: G06T 15/40, G06T 19/00

(54) **VERFAHREN UND ANORDNUNG ZUR DARSTELLUNG EINES DREIDIMENSIONALEN GEBÄUDEMODELLS AUF EINER ANZEIGEVORRICHTUNG AUF BASIS EINES WISSENSGRAPHEN**

(71) Anmelder: Siemens Aktiengesellschaft, 80333 München (DE)
(72) Erfinder: MAYER, Hermann Georg, 83209 Prien am Chiemsee (DE); ZECHLIN, Oliver, 6300 Zug (CH)

(57) **Zusammenfassung**

Die Erfindung betrifft ein Verfahren zur Darstellung eines dreidimensionalen Gebäudemodells auf einer Anzeigevorrichtung auf Basis eines Wissensgraphen, wie dem so genannten "Knowledge Graph", bei dem mindestens ein Zweig von jenen, den Wissensgraphen - durch Verbindung enthaltener Knoten gebildeten - bildenden Zweigen, gemeinsam mit vom Gebäudemodell abgeleiteten geometrischen Beziehungen gespeichert wird, wobei der Wissensgraph vorab auf Grundlage einer vorbereiteten, auf speicherbaren digitalen Daten beruhenden Repräsentation eines Gebäudes gebildet und gespeichert wird, zumindest teilweise und zumindest temporär auf der Anzeigerichtung zur Anzeige gebracht werden. Ferner betrifft die Erfindung eine Anordnung zur Durchführung des Verfahrens.

## Beschreibung

Die Erfindung betrifft ein Verfahren zur Darstellung eines dreidimensionalen Gebäudemodells auf einer Anzeigevorrichtung auf Basis eines Wissensgraphen gemäß Oberbegriff des Anspruchs 1, sowie eine Anordnung zur Darstellung eines dreidimensionalen Gebäudemodells auf einer Anzeigevorrichtung auf Basis eines Wissensgraphen gemäß dem Oberbegriff des Anspruchs 14.

Es ist bekannt, Gebäude als Modelle darzustellen und hierzu die Modelldaten in Dateien zu speichern. Die Dateigröße von Gebäudemodellen ist dabei in letzter Zeit sprunghaft angestiegen.

Neben der Umstellung von 2D auf 3D Modelle, lag dies vor allem and der Vereinigung vieler Disziplinen, für die diese Modelle nutzbar sein sollten, sowie erforderlicher Ansichten in einem Zentralmodell. Dadurch erreichen Modelle inzwischen schnell eine Größe von mehreren Gigabyte.

Zusätzlich wird die Problematik dadurch verschärft, dass oft auch Punktwolken aus Scans von Bestandsgebäuden auf diese Weise verwaltet, bzw. die Daten semantisch aufbereitet werden, beispielsweise als Knowledge Graph. Dies geht bis hin zur Erzeugung von so genannten digitalen Zwillingen von Gebäuden, wie in "Hubauer, Thomas et al.; "Use Cases of the Industrial Knowledge Graph at Siemens."; International Semantic Web Conference (2018) aufgezeigt; was das benötigte Datenvolumen zusätzlich aufbläht.

Die oben angesprochene Orientierung hin zu einem Zentralmodell ist auch aus der nachveröffentlichten PCT/EP2019/080528 für die Bildung digitaler Zwillinge - hier allerdings in Verbindung mit Industriesystemen ("typischerweise wird der digitale Zwilling für ein Industriesystem als zentraler Baustein gebildet, um mehrere Anwendungsfälle des Industriesystems zu bedienen.") - bekannt; was die Tendenz zusätzlich verstärkt.

Als weiterer Trend werden die Gebäudedaten zunehmend zentral abgelegt, sodass mehrere Benutzer gleichzeitig auf die Daten zugreifen können. Dieser Vorteil hat den Preis, dass enorme Datenmengen zwischen Cloud-Plattformen und lokalem Rechner bewegt werden müssen. Dies führt dazu, dass komplexere Gebäude kaum mehr flüssig geladen und visualisiert werden können. Auch ein interaktives Arbeiten zum Editieren der Modelle ist damit kaum mehr möglich. Beides aufgrund der Überlastung der Ressourcen, sei es Bandbreite, Speicher oder Rechenleistung.

Um diesen Herausforderungen zu begegnen wurde beispielsweise versucht, Gebäudemodelle in verschiedenen Detailierungsgraden, so genannten "Levels of Detail" (LoDs), abzuspeichern. Dies hilft insoweit, dass eine erste, grobe Visualisierung des Gebäudes schnell verfügbar ist, bzw. Anteile, die nicht für die eigentliche Aufgabe benötigt werden, zunächst nur in grober Auflösung geladen werden müssen.

Allerdings müssen zum Editieren des Gebäudemodells in der Regel doch die meisten Gebäudeteile nachgeladen geladen werden, da ein starker Zusammenhang zwischen den Teilen besteht, der sich nicht ohne Weiteres trennen lässt. So erstrecken sich die meisten Gebäudesysteme über Stockwerksgrenzen hinweg und auch die reinen Gebäudestrukturen umfassen oft das gesamte Gebäude, beispielsweise Fassaden und Treppenhäuser. Einige Darstellungsformen wie Punktwolken sind ohnehin meist nicht weiter unterteilt oder in LoDs vergröbert.

Eine weitere Möglichkeit das Editieren des Gebäudemodells zu beschleunigen, sind Streaming-Verfahren, wie beispielsweise das so genannte "Amazon AppStream", bei denen die eigentlichen Daten in einer Cloud verbleiben und nur die jeweilige Darstellung der Applikation bzw. die Benutzereingaben übertragen werden müssen, auch als so genannter "Remote Access" bezeichnet.

Dies erfordert jedoch einen ständig verfügbaren, schnellen Netzwerkzugriff, der nicht immer realisierbar ist, insbesondere wenn Modelle vor Ort, wie beispielsweise auf einer Baustelle, gebraucht werden. Zudem ist es wünschenswert, dass die Modelle auch von Endgeräten, wie beispielsweise Tablets oder Mobiltelefone, mit tendenziell langsamerer Datenverarbeitung flüssig geladen werden.

Insgesamt führt dies zu einer Verringerung der Produktivität, die den o.g. Vorteilen durch die Digitalisierung entgegen steht.

Die der Erfindung zugrundeliegende Aufgabe ist es daher, eine Lösung anzugeben, die die Nachteile des Standes der Technik überwindet, insbesondere liegt die technische Aufgabe darin, eine Lösung anzugeben, die es ermöglicht das während der Zeitdauer der Nutzung eines Gebäudemodells anfallende Datenvolumen je Zeiteinheit zu senken.

Die Aufgabe wird erfindungsgemäß durch das Verfahren zur Darstellung eines dreidimensionalen Gebäudemodells auf einer Anzeigevorrichtung auf Basis eines Wissensgraphen gemäß Oberbegriff des Anspruchs 1 durch dessen kennzeichnenden Merkmale gelöst, sowie durch die Anordnung zur Darstellung eines dreidimensionalen Gebäudemodells auf einer Anzeigevorrichtung auf Basis eines Wissensgraphen gemäß dem Oberbegriff des Anspruchs 14, durch dessen kennzeichnende Merkmale gelöst.

Bei dem erfindungsgemäßen Verfahren zur Darstellung eines dreidimensionalen Gebäudemodells auf einer Anzeigevorrichtung auf Basis eines Wissensgraphen, wie dem so genannten "Knowledge Graph", wird mindestens ein Zweig von jenen, den Wissensgraphen - durch Verbindung enthaltener Knoten gebildeten - bildenden Zweigen, gemeinsam mit vom Gebäudemodell abgeleiteten geometrischen Beziehungen gespeichert, wobei der Wissensgraph vorab auf Grundlage einer vorbereiteten, auf speicherbaren digitalen Daten beruhenden Repräsentation eines Gebäudes gebildet und gespeichert wird, zumindest teilweise und zumindest temporär auf der Anzeigerichtung zur Anzeige gebracht werden.

Das erfindungsgemäße Verfahren ermöglicht die Ressourcen, insbesondere den Speicherplatz- und Bandbreitenbedarf bei der Übertragung von Daten massiv zu reduzieren, da es durch die Erweiterung von Wissensgraphen zu Gebäuden um geometrische Beziehungen eine Konzentration der zur Anzeige gebrachten Darstellung auf diesen Beziehungen beruhend erfolgen kann, was beim Hinterlegen als auch beim Abruf der Daten Einsparungen beim Bedarf zur Folge hat.

Die erfindungsgemäße Anordnung zur Darstellung eines dreidimensionalen Gebäudemodells auf einer Anzeigevorrichtung auf Basis eines Wissensgraphen zeichnet sich dadurch aus, dass es Mittel zur Durchführung des Verfahrens einer seiner Ausgestaltungen und Weiterbildungen umfasst.

Hierdurch trägt sie zur Implementierung und mutatis mutandis damit Realisierung der im Zusammenhang mit dem Verfahren genannten Vorteile bei.

Weitere vorteilhafte Ausgestaltungen und Weiterbildungen der Erfindung sind durch die Unteransprüche angegeben.

Die in Bezug auf das Verfahren zur Darstellung eines dreidimensionalen Gebäudemodells auf einer Anzeigevorrichtung auf Basis eines Wissensgraphen nachstehend angeführten Vorteile und bevorzugten Ausgestaltungen, lassen sich dabei sinngemäß auf die erfindungsgemäße Anordnung zur Darstellung eines dreidimensionalen Gebäudemodells auf einer Anzeigevorrichtung auf Basis eines Wissensgraphen und seine sich mit den Ausgestaltungen des Verfahrens ergebenden bevorzugten Ausgestaltungen übertragen. Vorzugsweise wird das erfindungsgemäße Verfahren dabei derart weitergebildet, dass eine Ausgestaltung vorliegt, bei der die Vorbereitung der digitalen Repräsentation des Gebäudes derart erfolgt, dass die digitalen Daten, die das Gebäude repräsentieren in einem Format, gespeichert werden, welches, insbesondere automatisch, in einen Wissensgraphen überführt werden kann. Hierdurch wird unter anderem eine Ausgestaltung bereitgestellt, bei der die Anzeige des Gebäudemodells bzw. die Nutzung von Wissensgraphen von Gebäuden auf einfache Weise umgesetzt wird. Dabei unterstützt diese Weiterbildung es auch, dass ein on demand Überführen von zumindest Teilen des Wissensgraphen möglich wird.

Diese Vorteile sind auch geboten bzw. verstärken sich, wenn alternativ oder ergänzend das erfindungsgemäße Verfahren derart weitergebildet wird, dass die Überführung derart erfolgt, dass der Wissensgraph als für Bauwerksdatenmodellierung interpretierbare Daten, insbesondere dem so genannten "Building Information Modeling"-, BIM-, Standard gespeichert wird, und/oder die Daten gemäß einem so genannten "Industry Foundation Classes"-, IFC-, Standard organisiert sind.

Alternativ oder ergänzend wird das erfindungsgemäße Verfahren derart weitergebildet, dass eine Ausgestaltung vorliegt, bei der die digitalen Daten derart speicherbar sind, dass die Repräsentation des Gebäudes als so genannte Punktwolke, gebildet wird. Eine Punktwolke ist eine vergleichswiese einfach zu strukturierende und damit für die erweiterte Wissensgraphenbildung gemäß Erfindung gut geeignete digitale Repräsentation des Gebäudes.

Vorzugsweise wird dabei das erfindungsgemäße Verfahren derart weitergebildet, dass eine Ausgestaltung der Erfindung entsteht, bei der die Daten derart speicherbar sind, dass die Repräsentation des Gebäudes auf Grundlage einer Unterteilung der Punktwolke in disjunkte Kacheln von Punkten gebildet wird. Durch diese Unterteilung wird die Bildung von geometrischen Beziehungen und damit die Erweiterung des Wissensgraphen besonders gestützt, insbesondere weil diese Unterteilung an Stellen erfolgen kann, die in Bezug auf ein Gebäude einen prominenten Punkt darstellen, außerdem verkleinert es die darstellbaren Elemente und unterstützt somit auch die ressourcenschonende Wirkung der Erfindung.

Alternativ oder ergänzend wird bei einer Weiterbildung des erfindungsgemäßen Verfahrens eine Ausgestaltung der Erfindung bewirkt, bei der die Vorbereitung derart erfolgt, dass eine Generierung der Punktwolke, insbesondere durch ein Aufnahmegerät, wie beispielsweise einer Digitalkamera, derart durchgeführt wird, dass aktuell generierte Punkte der Punktwolke mit einer Information, beispielsweise einem Label wie dem "Point of Interest"-Label versehen wird, die zu einem späteren Zeitpunkt als der Aktualisierung darauf schließen lässt, dass es sich um Punkte einer Punktwolke handelt. Hierdurch wird die erfindungsgemäße Anzeige bereits bei der Aufnahme eines Gebäudes, auch Scannen des Gebäudes, gestützt, denn es können bei der Aufnahme in der Regel einstellbare so genannte Points of Interest derart gewählt werden, dass die erzeugte Punktwolke ideal für die Darstellung des Gebäudes auf der Anzeigevorrichtung geeignet ist, jedenfalls bestehen dadurch weniger Herausforderungen und Kompromisse als bei einer nachträglichen Überführung einer bereits vorhandenen Punktwolke.

Unter anderem eine Einsparung von lokalem Speicherplatzbedarf aber auch der benötigen Datenübertragungsbandbreite ergeben sich, wenn das erfindungsgemäße Verfahren derart weitergebildet wird das eine Ausgestaltung entsteht, bei der die Vorbereitung derart erfolgt, die Generierung der Punktwolke derart erfolgt, dass die digitalen Daten vom lokalen Ort der Generierung sukzessive auf eine, insbesondere als so genannte Cloud betriebene, separate Datenbasis übertragen werden. Alternativ oder ergänzend kann dabei das erfindungsgemäße Verfahren derart weitergebildet werden, dass eine Ausgestaltung der Erfindung vorliegt, bei der die sukzessive Übertragung derart erfolgt, dass ein Abrufen der gesamten Daten von vom lokalen Ort der Generierung und der Ort der Datenbasis, nur ortsdisjunkt möglich ist. Hierdurch wird ein Datenschutz derart bereitgestellt, dass ein Zugriff auf das Aufnahmegerät durch unberechtigte Dritte bzw. generell ein unberechtigter Zugriff auf das Aufnahmegerät möglich ist, da nur wenn die Gesamtheit der gerade aufgenommenen und lokal gespeicherten Daten und der bereits übertragenen und lokal somit löschbaren Daten vorliegt, das Gebäudemodell uneingeschränkt darstellbar wird. D.h., spätestens wenn alle Daten beim berechtigten Nutzer sind, weil alle Daten übertragen wurden, ist die uneingeschränkte Nutzung der Daten möglich.

Eine alternative oder ergänzende Ausgestaltung der Erfindung liegt vor, wenn das erfindungsgemäße Verfahren derart weitergebildet wird, dass die digitalen Daten derart speicherbar sind, dass die Repräsentation des Gebäudes als modifizierter Wissensgraph gebildet wird. Hierdurch wird eine erfindungsgemäße Erweiterung des Wissensgraphen ermöglicht.

Vorzugsweise wird dies dabei derart weitergebildet, dass eine Ausgestaltung des erfindungsgemäßen Verfahren vorliegt, bei der die Daten derart speicherbar sind, dass die Repräsentation des Gebäudes auf Grundlage einer Modifikation des Wissensgraphen derart, dass zu den Knoten des Wissensgraphen, weitere hinsichtlich des geometrischen Ortes zum Gebäude disjunkte Knoten derart generiert werden, dass je generiertem Knoten, gemeinsam mit den generierten Knoten Zweige mit zumindest der Information der geometrischen Beziehung zumindest zu einem der Knoten des Wissensgraphen speicherbar gebildet werden. Hierdurch werden Knoten zur Erweiterung erzeugt, die nicht Teil des Gebäudes sind und hierdurch also als (virtuell) Blickwinkelknoten genutzt werden können. Da diese Blickwinkelknoten relativ zu den Gebäudeknoten liegen, besteht zudem auch eine geometrische Beziehung des jeweiligen Blickwinkelknotens zu den Gebäudeknoten. Somit lassen sich die erfindungsgemäße Erweiterung in geeigneter Weise erzeugen.

Diese Vorteile werden unterstützt bzw. ergänzt, wenn alternativ oder ergänzend das erfindungsgemäße Verfahren derart weitergebildet wird, dass eine Ausgestaltung vorliegt, bei der die Zweige derart gebildet werden, dass der Information zusätzlich mindestens eine physikalische Eigenschaft des Gebäudes, insbesondere eine Unterteilung in verstellt und/oder unverstellt sichtbar, verborgen, transparent, beigefügt wird. Diese Eigenschaften können sich beispielweise, ausgehend von den generierten disjunkten Blickwinkelknoten, ergeben und genutzt werden. Beispielswiese wird es Blickwinkelknoten geben, von denen Gebäudeknoten sichtbar sind und andere unsichtbar.

Informationen wie diese können vorteilhaft genutzt werden, insbesondere wird dies dann der Fall sein, wenn das erfindungsgemäße Verfahren derart weitergebildet wird, dass eine Ausgestaltung der Erfindung vorliegt, bei der das zum Anzeigebringen derart erfolgt, dass ein angezeigter Teil des Gebäudes abhängig von einer Auswertung der Information erfolgt.

Vorzugsweise wird das erfindungsgemäße Verfahren dabei derart weitergebildet, dass eine Ausgestaltung vorliegt, bei der der angezeigte Teil durch Wahl des generierten Knotens und/oder einer durch die Information beschränkbar gebildet wird. Hierdurch wird der ressourcenschonende Aspekt der Erfindung unterstützt und es können beispielsweise unterschiedliche Detailgrade derart zum Einsatz kommen, dass Teile aufgrund der Information in grober Auflösung dargestellt werden und andere Teile detaillierter, insbesondere in bester Auflösung, auf der Anzeige zur Darstellung gebracht werden. So ist nur ein geringer Teil von hochauflösenden Darstellungen ermöglichenden Daten für die Darstellung auf der Anzeige an das die Anzeige beherbergende Gerät notwendig.

Weitere Vorteile und Details der Erfindung werden anhand der in den Figuren 1 bis 6 dargestellten Ausführungsbeispiele der Erfindung erläutert. Dabei zeigt
- FIGUR 1: schematisch ein Ausführungsbeispiel eines erfindungsgemäß um Blickwinkelknoten erweiterten Wissensgraphen,
- FIGUR 2: schematisch ein Ausführungsbeispiel der erfindungsgemäßen Erzeugung geometrischer Beziehungen aufgrund der Blickwinkelknoten,
- FIGUR 3: schematisch als Ausführungsbeispiel der erfindungsgemäßen Überführung von zumindest Teilen des erweiterten Wissensgraphen in eine erfindungsgemäße Anzeige,
- FIGUR 4: schematisch ein Ausführungsbeispiel der Erfindung, eine Vorausberechnung zur erfindungsgemäßen Durchführung der Anzeige verdeckter Elemente abhängig von einem Blickwinkel,
- FIGUR 5: schematisch ein Ausführungsbeispiel der Erfindung, eine Vorausberechnung zur erfindungsgemäßen Durchführung der Anzeige verdeckter Elemente abhängig von einem anderen Blickwinkel,
- FIGUR 6: schematisch ein Ausführungsbeispiel eines Ablaufs einer Aufnahme eines Gebäudes zur Erzeugung einer Punktwolke von Points of Interest POI und Erzeugung sich aus den POIs ergebenden geometrischen Beziehungen.

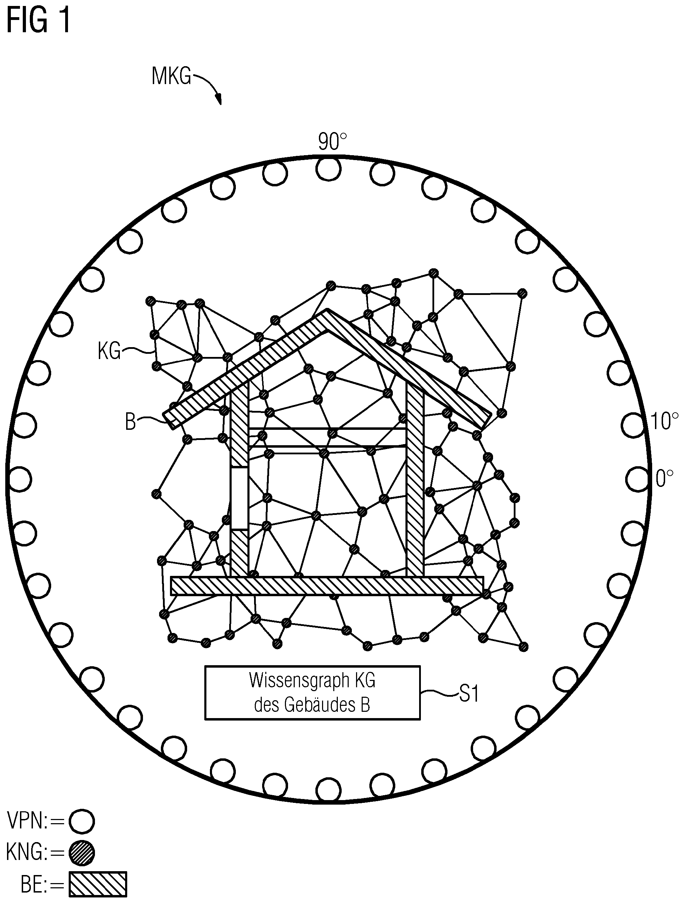

Bei den im Folgenden in FIGUR 1 bis FIGUR 6 erläuterten Ausführungsbeispielen handelt es sich um bevorzugte Ausführungsformen und Weiterbildungen der Erfindung.

Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind.

Des Weiteren sind die beschriebenen Ausführungsformen auch durch weitere der bereits beschriebenen Merkmale der Erfindung ergänzbar.

Gleiche Bezugszeichen haben in den verschiedenen Figuren die gleiche Bedeutung.

Insbesondere um eine schnelle Ladbarkeit und Darstellbarkeit eines Gebäudes (Building) B zu erreichen, wird wie beschrieben erfindungsgemäß ein Modell des Gebäudes, erfindungsgemäß als mit geometrischen Beziehungen angereicherter so genannter "Knowledge Graph", also ein Wissensgraph oder auch -baum, beschrieben werden.

Dazu wird davon ausgegangen, dass das Gebäude selbst bereits als Knowledge Graph KG vorliegt, wie es in der FIGUR 1, insbesondere durch einen ersten Schritt S1 als Auszug des Ausführungsbeispiels des erfindungsgemäßen Verfahrens, schematisch angedeutet ist oder zumindest in einem Format, das einfach in einen Knowledge Graph KG überführt werden kann. Dabei kann e sich beispielsweise um Format handeln, welches gemäß dem so genannten "Industry Foundation Classes"(IFC)Standard oder einem Derivat hiervon gebildet ist, also Standards, die mindestens Teile dieses Standards verwenden und weiterbilden und für ein so genanntes "Building Information Modeling" (BIM), also für Bauwerksdatenmodellierung, eingerichtet sind. Ein solches Format wäre als also beispielsweise das BIM-IFC Format, welches gemäß entsprechender so genannter "Object Windows Library", (OWL)-Spezifikation eingerichtet ist.

Nicht in FIGUR 1 dargestellt, sondern später diskutiert, ist es alternativ oder ergänzend möglich Punktwolken aus Scans von Gebäuden B, die in Kacheln (englisch "Tiles") zerlegt wurden, als vereinfachten Graph abzuspeichern und auf die erfindungsgemäße Weise mit geometrischen Beziehungen zu werden.

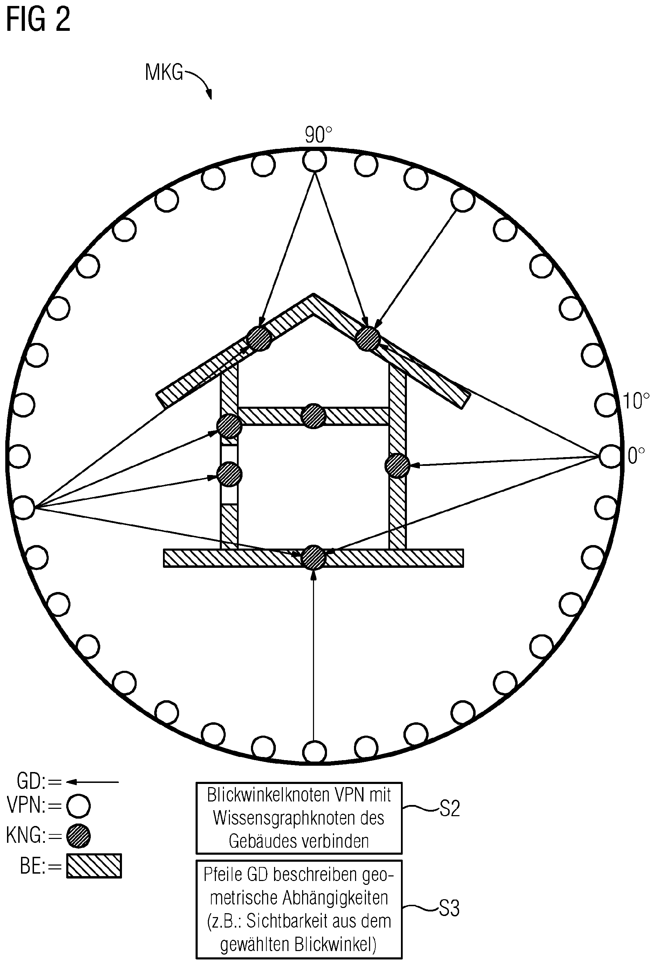

Bei dem in FIGUR 2 gezeigten Knowledge Graphen KG werden zusätzlich zu den Knoten in dem Gebäudegraphen KG, für jeden möglichen beispielsweise von außen auf das Gebäude platzierten Blickwinkel VPN, wie in FIGUR 2 durch die Punkte auf dem außenliegenden Kreis angedeutet, weitere Knoten angelegt.

Hierzu sind in FIGUR 2 im 10°-Raster Knoten VPN für den Blickwinkel um das Gebäude herum angeordnet. Dabei ist die Darstellung in FIGUR 1 lediglich zur vereinfachten Darstellung des erfindungsgemäßen Prinzips zweidimensional, die tatsächliche Implementierung erfolgt dreidimensional. Das heißt, eine Implementierung wird mit einer Anordnung der zusätzlichen, insbesondere äquidistant angeordneten, Knoten VPN für die Blickwinkel auf einer Kugel um das Gebäude herum umgesetzt werden bzw. ausgeführt sein.

Auch die Auflösung der möglichen Blickwinkel ist nicht auf die Auflösung gemäß Darstellung beschränkt, sie kann beliebig gewählt werden, wobei sich das sich das zur Optimierung an Parametern wie den Darstellungsmöglichkeiten einer Zielapplikation orientieren wird.

Ausgehend von den angelegten Blickwinkel-Knoten VPN wird nun berechnet welche Gebäudeelemente BE vom betreffenden Knoten VPN aus sichtbar sind und nicht durch andere Elemente BE verdeckt werden. Die FIGUR 2 zeigt beispielhaft und schematisch angedeutet wie die Verknüpfung einiger Blickwinkel-Knoten VPN mit den entsprechend sichtbaren Elementen BE des Gebäudes B sich gemäß erfindungsgemäßem Beispiel, insbesondere durch einen zweiten Schritt S2 und dritten Schritt S3 als Auszug des Ausführungsbeispiels des erfindungsgemäßen Verfahrens, schematisch angedeutet darstellt.

Lässt die Applikation transparente Elemente, wie beispielsweise Fenster-, Glastürscheiben, zu, so kann auch dies in der Verknüpfung entsprechend berücksichtigt werden.

Wird nun eine Applikation geöffnet, die Gebäudemodelle basierend auf der erfindungsgemäßen Datenaufbereitung darstellt, so wird auf vorteilhafte Weise darin das Gebäude B zunächst aus einem bestimmten Blickwinkel also aus Sicht eines, im Beispiel der Blickwinkelknoten für 0°, bzw. einiger weniger Blickwinkel-Knoten angezeigt.

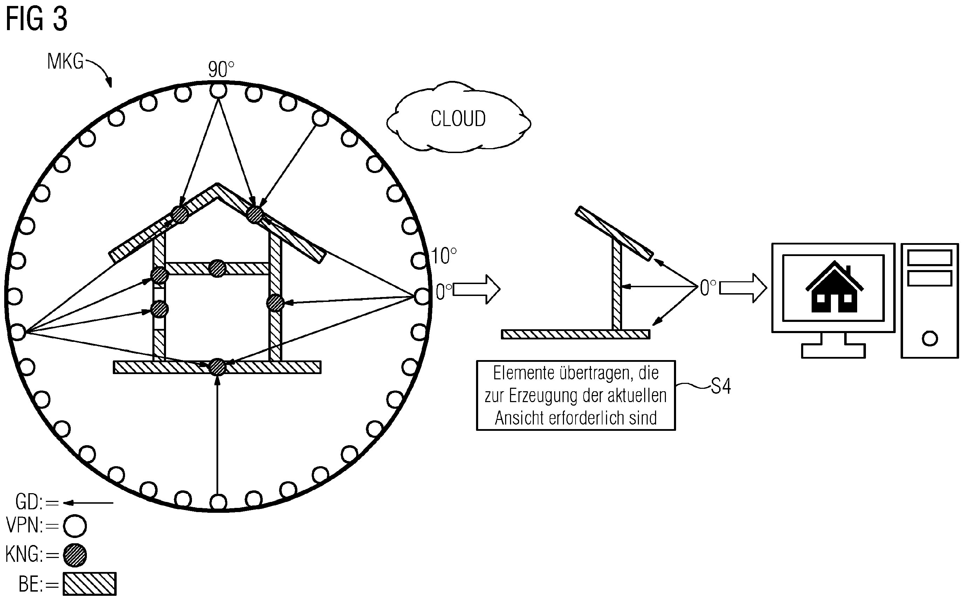

Hier macht sich die erfindungsgemäße Datenaufbereitung und erfindungsgemäße Darstellung der Daten dann derart vorteilhaft bemerkbar, das nur für diesen Blickwinkel VPN die entsprechenden Elemente BE aus der Cloud CLOUD geladen und angezeigt werden, wie es in der FIGUR 3 insbesondere durch einen vierten Schritt S4 als Auszug des Ausführungsbeispiels des erfindungsgemäßen Verfahrens, schematisch angedeutet ist.

Dur diese Konzentration auf die Blickwinkel können auf Geräten mit geringer Speicher- und Rechnerkapazität, beispielsweise auch auf Smartphone oder Tablets, die komplexesten Gebilde dargestellt werden und nicht nur auf Laptops und Rechnern, insbesondere höherer Leistung.

Alternativ oder ergänzend kann zusätzlich das Gesamtgebäude B in einem groben Detailierungsgrad ("Level of Detail", LoD) geladen und zur Darstellung gebracht werden.

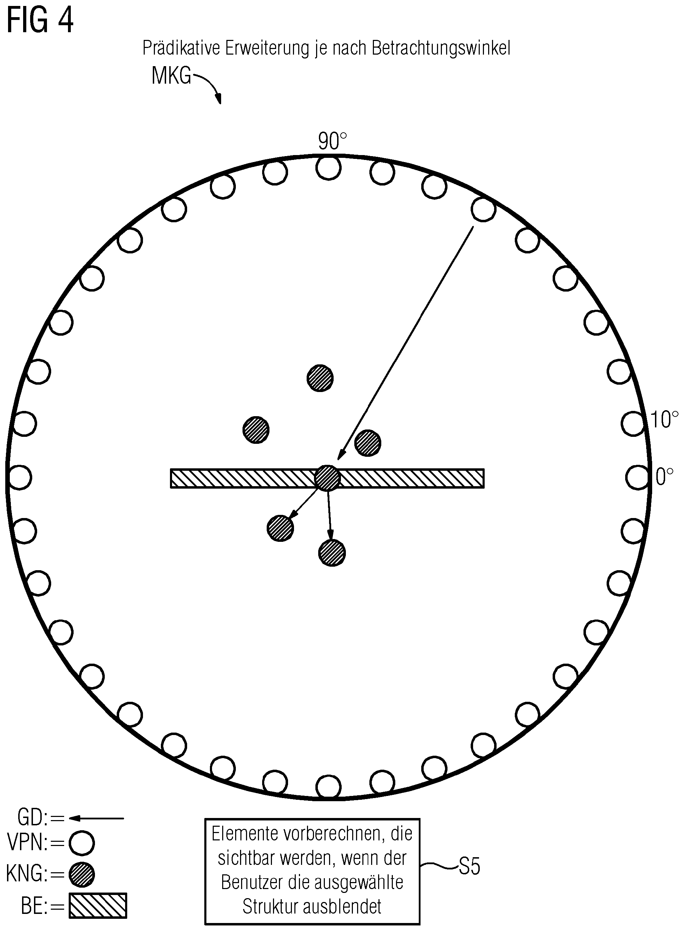

Wird der Blickwinkel VPN vom Benutzer nun geändert, so wird eine weitere Ansicht, entsprechend FIGUR 4 schematisch angedeutet, beispielsweise die Ansicht vom Blickwinkel VPN bei 90° geladen.

Optional kann dabei während des Wechselns zu einem neuen Blickwinkel, hier also des Drehens von 0° auf 90°, immer die Grobansicht des Gebäudes B mitbewegt werden, sodass dem Nutzer eine flüssige Ansicht präsentiert wird.

Es kann erfindungsgemäß so weitergebildet sein, dass die detaillierte Ansicht dann erst beim Beenden des Drehvorgangs entsprechend dem neuen Blickwinkel geladen wird. Alternativ oder ergänzend wird in einigen Applikationen dem Benutzer der Gebäudegraph angezeigt, so dass dieser direkt zu benötigten Elementen BE springen kann.

Diese können dabei aber immer einzeln selektiert und dann auch einzeln nachgeladen werden.

Bei einigen Applikationen wird der Benutzer auch sichtbare Gebäudeelemente virtuell ausblenden können, um dahinterliegende Elemente editieren zu können, wie beispielsweise Dächer, Wände, Decken und Ähnliches.

In so einem Fall wird erfindungsgemäß auch der Geometriegraph neu berechnet werden, da nun für den entsprechende Blickwinkel VPN andere Elemente BE sichtbar sind, die vorher versteckt waren, bzw. temporär sind die ausgeblendeten Elemente nicht mehr mit dem Blickwinkelknoten VPN verbunden.

Dieser Vorgang kann gemäß einer Weiterbildung der Erfindung jeweils bereits vorbereitet werden, auch wenn der Benutzer noch gar keine Elemente BE ausgeblendet hat und sich noch in der aktuellen Ansicht orientiert.

Dies erfolgt dabei beispielsweise derart, dass für alle in der aktuellen Ansicht sichtbaren Elemente BE dabei ein potenzieller Graph berechnet wird, der gültig wäre und vorgehalten wird, wenn der Benutzer das entsprechende Element verstecken würde.

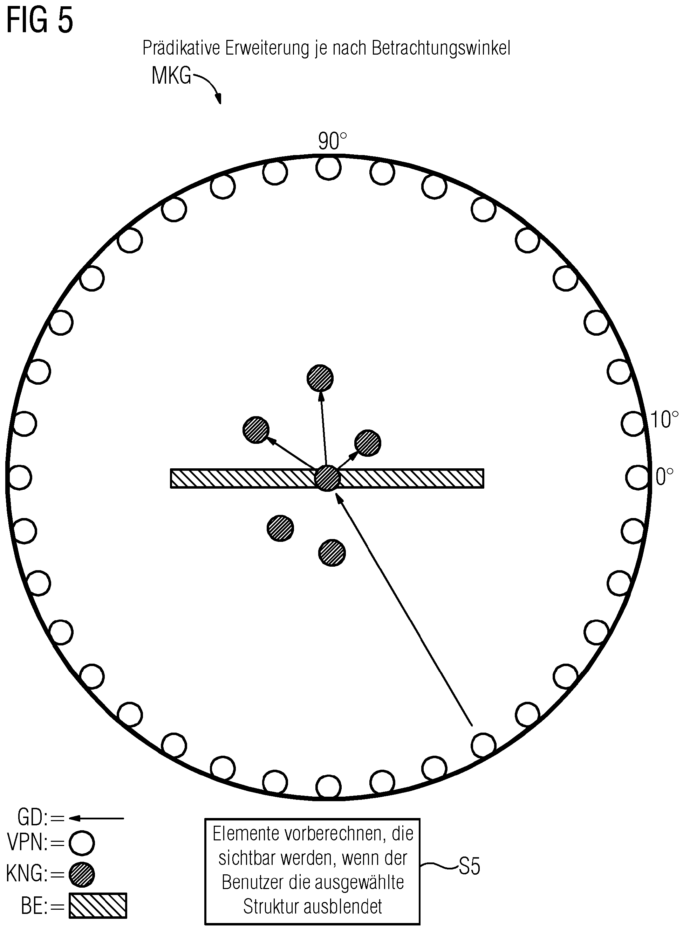

In FIGUR 4 und FIGUR 5 sind schematisch solche potenziellen Graphen für verschiedene Blickwinkel angedeutet. Der entsprechende vorgehaltene Graph würde jeweils aktiviert werden, wenn das blaue Element in der Mitte, in der das Gebäudemodell darstellenden Applikation, ausgeblendet wird.

Da möglicherweise sehr viele Elemente BE gleichzeitig dargestellt werden, ist eine Vorberechnung, beispielsweise zum Vorhalten von potenziellen Graphen, evtl. noch nicht für alle Elemente BE abgeschlossen, wenn der Benutzer eine neue Interaktion startet, wie insbesondere durch einen beiden Figuren gemeinsamen fünften Schritt S5 als Auszug des Ausführungsbeispiels des erfindungsgemäßen Verfahrens, schematisch angedeutet ist.

Daher soll gemäß einer weiteren Ausgestaltung der Erfindung vorgesehen sein, dass die Berechnungen priorisiert werden. Dazu können Erfahrungswerte dienen oder es wird die Bearbeitungsreihenfolge der Benutzer in die Cloud CLOUD zurückgespeichert. Dort kann dann über Lernverfahren, wie dem maschinellen Lernen, eine nutzerübergreifende Priorisierung berechnet werden.

Es werden die potenziellen Graphen in der Regel nur lokal gespeichert. Sie können aber während der Lebensdauer der Applikation, oder für ein späteres Fortsetzen der Session darüber hinaus erhalten bleiben, auch wenn sie gerade nicht relevant sind.

Gegebenenfalls können sie bei einer Weiterbildung später wiederverwendet werden, wenn ein ähnlicher Applikationszustand eintritt und man die potenziellen Graphen nicht noch einmal erneut berechnen kann oder will. Dies ist insbesondere dann von Vorteil, wenn die Berechnung zeitintensiv ist, z.B. aufgrund von zugelassenen transparenten Elementen oder komplexe Element-Geometrien mit Löchern oder ähnlichem.

Alternativ oder ergänzend kann ein erfindungsgemäße geometrische Beziehungen enthaltender Knowledge Graph auf Grundlage einer so genannten Punktwolke gebildet werden.

Dies wird von Vorteil sein, wenn beispielsweise für ein Gebäude B nur eine große, zusammenhängende Punktwolke existiert. Diese wird dann erfindungsgemäße vorverarbeitet werden, damit eine Datenaufbereitung gegeben ist, die wie oben beschrieben durch Applikationen erfindungsgemäß genutzt werden kann.

Hierzu wird bei dieser erfindungsgemäßen Ausgestaltung die Punktwolke in disjunkte Kacheln zerlegt, die separat in einem Knowledge Graph KG verwaltet werden können, also analog den oben beschriebenen Gebäude-Elementen BE. Die Zerlegung kann auch im Nachhinein anhand bestimmter Kriterien erfolgen, wie beispielsweise Winkel- oder Farbänderungen oder Zugehörigkeit zu Räumen und Stockwerken, welche in der Regel separat erfasst werden.

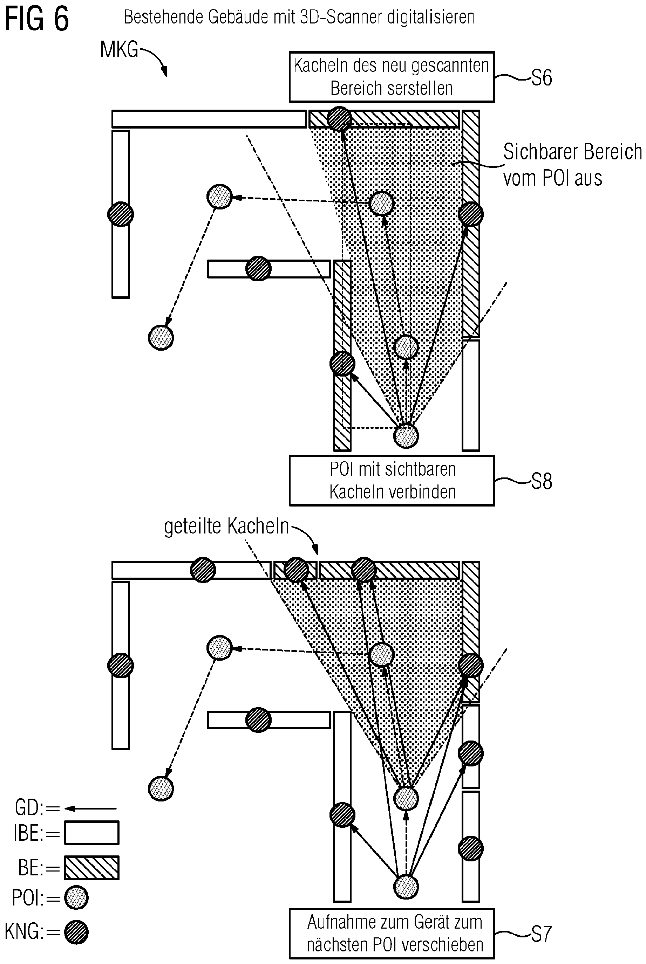

Gemäß Weiterbildung dieser erfindungsgemäßen Ausgestaltung erfolgt die Zerlegung in Kacheln gleich während der Aufnahmephase, wie es schematisch in der FIGUR 6 dargestellt ist. Dem liegt die erfinderische Beobachtung zugrunde, dass sich bei den meisten Geräten zum Scannen von Gebäudemodellen so genannte "Points of Interest! (PoI) angeben lassen, also Punkte auf dem Pfad, in der FIGUR 6 durch gestrichelte Pfeile von Point of Interest zu Point of Interest dargestellt, des Aufnahmegeräts.

Von Vorteil ist es, wenn diese Points of Interest mit einer besonderen Sicht verbunden sind, beispielsweise ein Exponat oder Gerät ist hier sichtbar / zugreifbar.

Ausgehend von der jeweiligen Position kann nun eine ähnliche Sichtbarkeitsberechnung erfolgen wie zuvor für die Außenansicht des Gebäudes. Im Unterschied dazu werden die sichtbaren Scan-Punkte dann bestimmten Kacheln als nächstgrößerer Einheit zugeordnet. In FIGUR 6 auf der linken Seite ist die Erzeugung von Kacheln anhand des Erfassungskegels des Aufnahmegeräts dargestellt und insbesondere durch einen sechsten Schritt S6 als Auszug des Ausführungsbeispiels des erfindungsgemäßen Verfahrens, schematisch angedeutet. Zusätzlich werden Kacheln an prominenten Merkmalen des Gebäudes abgetrennt, wie beispielsweise eine 90° Ecke zwischen Wänden. Bewegt sich das Scan- bzw. Aufnahmegerät nun zum nächsten Point of Interest PoI wie insbesondere durch einen siebten Schritt S7 als Auszug des Ausführungsbeispiels des erfindungsgemäßen Verfahrens, schematisch angedeutet, so können ggf. existierende Kacheln nochmal zerlegt werden wie insbesondere durch einen achten Schritt S8 als Auszug des Ausführungsbeispiels des erfindungsgemäßen Verfahrens, schematisch angedeutet, um eine genauere Überdeckung mit dem sichtbaren Bereich zu erreichen.

Wie insbesondere durch einen neunten Schritt S9 als Auszug des Ausführungsbeispiels des erfindungsgemäßen Verfahrens, schematisch angedeutet, werden die Points of Interst POI mit sichtbaren Kacheln verbunden, also erfindungsgemäß einer geometrischen Beziehung erzeugende Grundlage - hergestellt.

Kacheln die das Gerät gerade nicht sehen kann, können vom lokalen Speicher gelöscht werden und in die Cloud CLOUD übertragen werden. Dies spart lokalen Speicher und beschleunigt somit die lokale Datenverarbeitung. Ferner hat dies den Vorteil, dass die Kacheln lokal nicht mehr zugreifbar sind, d.h. zu keinem Zeitpunkt befindet sich das gesamte Gebäude auf dem lokalen Speicher.

Somit ist der Zugriff auf das Gesamtmodell nicht möglich, so dass ein Datenschutz realisiert wird, der beispielsweise dann von Vorteil ist, wenn der Scan durch eine weniger zuverlässige Drittfirmen durchgeführt wird. Mit dieser Weiterbildung sollte auch sichergestellt werden, dass während der Scanvorgang durchgeführt wird, durch vertrauenswürdiges Personal vor Ort verhindert wird, dass eine direkte Kopie erstellt wird. Später, wenn das Gerät nicht mehr überwachbar ist, sind die Daten durch die Weiterbildung bereits nicht mehr auf dem lokalen Speicher.

Mit der Erfindung wie sie durch die Ansprüche definiert ist, sollen alle durch die Ansprüche abgedeckten Varianten umfasst sein, bei der die Anreicherung eines existierenden Knowledge Graphen um geometrische Informationen gegeben ist, die ein optimales, teilweises Laden des Modells aus einer Netzwerkumgebung ermöglichen.

## Patentansprüche

1. Verfahren zur Darstellung eines dreidimensionalen Gebäudemodells auf einer Anzeigevorrichtung auf Basis eines Wissensgraphen, wie dem so genannten "Knowledge Graph",
**dadurch gekennzeichnet, dass** mindestens ein Zweig von jenen, den Wissensgraphen - durch Verbindung enthaltener Knoten gebildeten - bildenden Zweigen, gemeinsam mit vom Gebäudemodell abgeleiteten geometrischen Beziehungen gespeichert wird, wobei der Wissensgraph vorab auf Grundlage einer vorbereiteten, auf speicherbaren digitalen Daten beruhenden Repräsentation eines Gebäudes gebildet und gespeichert wird, zumindest teilweise und zumindest temporär auf der Anzeigerichtung zur Anzeige gebracht werden.

2. Verfahren nach dem vorhergehenden Anspruch,
**dadurch gekennzeichnet, dass** die Vorbereitung der digitalen Repräsentation des Gebäudes derart erfolgt, dass die digitalen Daten, die das Gebäude repräsentieren, in einem Format gespeichert werden, welches, insbesondere automatisch, in einen Wissensgraphen überführt werden kann.

3. Verfahren nach dem vorhergehenden Anspruch,
**dadurch gekennzeichnet, dass** die Überführung derart erfolgt, dass der Wissensgraph als für Bauwerksdatenmodellierung interpretierbare Daten, insbesondere dem so genannten "Building Information Modeling"-, BIM-, Standard gespeichert wird, und/oder die Daten gemäß einem so genannten "Industry Foundation Classes"-, IFC-, Standard organisiert sind.

4. Verfahren nach einem der vorhergehenden Ansprüche,
**dadurch gekennzeichnet, dass** die digitalen Daten derart speicherbar sind, dass die Repräsentation des Gebäudes als so genannte Punktwolke, gebildet wird.

5. Verfahren nach dem vorhergehenden Anspruch,
**dadurch gekennzeichnet, dass** die Daten derart speicherbar sind, dass die Repräsentation des Gebäudes auf Grundlage einer Unterteilung der Punktwolke in disjunkte Kacheln von Punkten gebildet wird.

6. Verfahren nach einem der vorhergehenden Ansprüche,
**dadurch gekennzeichnet, dass** die Vorbereitung derart erfolgt, dass eine Generierung der Punktwolke, insbesondere durch ein Aufnahmegerät, wie beispielsweise einer Digitalkamera, derart durchgeführt wird, dass aktuell generierte Punkte der Punktwolke mit einer Information, beispielsweise einem Label wie dem "Point of Interest"-Label versehen wird, die zu einem späteren Zeitpunkt als der Aktualisierung darauf schließen lässt, dass es sich um Punkte einer Punktwolke handelt.

7. Verfahren nach dem vorhergehenden Anspruch,
**dadurch gekennzeichnet, dass** die Vorbereitung derart erfolgt, die Generierung der Punktwolke derart erfolgt, dass die digitalen Daten vom lokalen Ort der Generierung sukzessive auf eine, insbesondere als so genannte Cloud betriebene, separate Datenbasis übertragen werden.

8. Verfahren nach dem vorhergehenden Anspruch,
**dadurch gekennzeichnet, dass** die sukzessive Übertragung derart erfolgt, dass ein Abrufen der gesamten Daten vom lokalen Ort der Generierung und der Ort der Datenbasis nur ortsdisjunkt möglich ist.

9. Verfahren nach einem der vorhergehenden Ansprüche,
**dadurch gekennzeichnet, dass** die digitalen Daten derart speicherbar sind, dass die Repräsentation des Gebäudes als modifizierter Wissensgraph, gebildet wird.

10. Verfahren nach dem vorhergehenden Anspruch,
**dadurch gekennzeichnet, dass** die Daten derart speicherbar sind, dass die Repräsentation des Gebäudes auf Grundlage einer Modifikation des Wissensgraphen derart, dass zu den Knoten des Wissensgraphen, weitere hinsichtlich des geometrischen Ortes zum Gebäude disjunkte Knoten derart generiert werden, dass je generiertem Knoten, gemeinsam mit den generierten Knoten Zweige mit zumindest der Information der geometrischen Beziehung zumindest zu einem der Knoten des Wissensgraphen speicherbar gebildet werden.

11. Verfahren nach dem vorhergehenden Anspruch,
**dadurch gekennzeichnet, dass** die Zweige derart gebildet werden, dass der Information zusätzlich mindestens eine physikalische Eigenschaft des Gebäudes, insbesondere eine Unterteilung in verstellt und/oder unverstellt sichtbar, verborgen, transparent, beigefügt wird.

12. Verfahren nach dem vorhergehenden Anspruch,
**dadurch gekennzeichnet, dass** das zur Anzeigebringen derart erfolgt, dass ein angezeigter Teil des Gebäudes abhängig von einer Auswertung der Information erfolgt.

13. Verfahren nach dem vorhergehenden Anspruch,
**dadurch gekennzeichnet, dass** der angezeigte Teil durch Wahl des generierten Knotens und/oder einer durch die Information beschränkbar gebildet wird.

14. Anordnung zur Darstellung eines dreidimensionalen Gebäudemodells auf einer Anzeigevorrichtung auf Basis eines Wissensgraphen, wie dem so genannten "Knowledge Graph",
**gekennzeichnet durch** Mittel zur Durchführung des Verfahrens nach einem der vorhergehenden Ansprüche.
